# EUROPEAN PATENT SPECIFICATION

(11) **EP 3 695 989 B1**
(45) Date of publication and mention of the grant of the patent: **29.09.2021**
(21) Application number: 20155514.1
(22) Date of filing: 05.02.2020
(51) Int. Cl.: B60C 11/04, B60C 11/13, B60C 11/03

(54) **PNEUMATIC TIRE**
LUFTREIFEN
PNEUMATIQUE GONFLABLE

(30) Priority: 07.02.2019 JP 2019020646
(43) Date of publication of application: 19.08.2020
(73) Proprietor: SUMITOMO RUBBER INDUSTRIES, LTD., Chuo-ku Kobe-shi Hyogo 651-0072 (JP)
(72) Inventor: NAKAJIMA, Koichi, Kobe-shi, Hyogo 651-0072 (JP)
(74) Representative: Manitz Finsterwald Patent- und Rechtsanwaltspartnerschaft mbB

(56) References cited:
- EP-A1- 3 517 321
- GB-A- 1 217 076
- JP-A- 2016 124 442

## Description

### BACKGROUND OF THE INVENTION

### Field of the Invention

The present invention relates to a pneumatic tire.

### Description of the Background Art

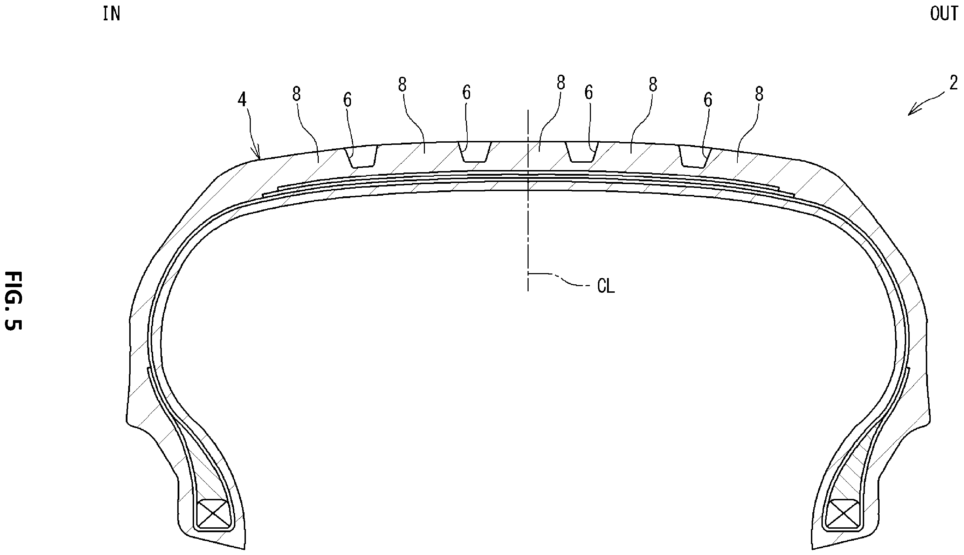

FIG 5 shows a cross-section of a conventional tire 2. As shown in FIG. 5, the tire 2 has grooves 6 formed in a tread 4 in order to assure drainage performance in rainy weather and inhibit occurrence of a hydroplaning phenomenon. Thus, ribs 8 are formed in the tread 4 so as to extend in the circumferential direction.

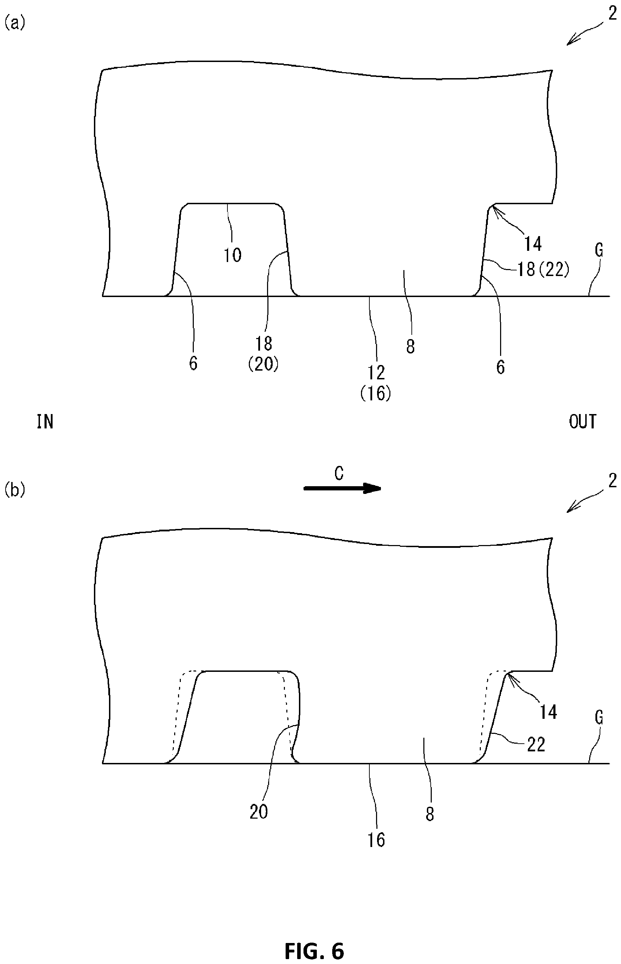

FIG 6 schematically illustrates the ribs 8 which are in contact with a road surface G, in the tire 2 mounted to a vehicle. FIG 6(a) shows the state of the ribs 8 during straight running and FIG 6(b) shows the state of the ribs 8 during cornering. In FIG 6, the right side represents the outer side, in the width direction, of the vehicle.

Each groove 6 typically has such a cross-sectional shape as to reduce the width toward a bottom surface 10 whereas each rib 8 has such a cross-sectional shape as to increase the width from an outer surface 12 toward a base portion 14.

Each rib 8 has a land surface 16 and a pair of wall surfaces 18. The land surface 16 is the outer surface 12 of the rib 8, and is brought into contact with the road surface G The paired wall surfaces 18 each extend from the base portion 14 of the rib 8 toward the land surface 16 thereof. Among the wall surfaces 18, the wall surface 18 located on the inner side in the vehicle width direction when the tire 2 is mounted to the vehicle is referred to as an inside wall surface 20, and the wall surface 18 located on the outer side in the vehicle width direction when the tire 2 is mounted to the vehicle is referred to as an outside wall surface 22.

The ribs 8 are pressed toward the road surface G as a whole during straight running. A force along the axial direction, that is, a centrifugal force which acts on the ribs 8 is increased during cornering. In FIG 6(b), the direction indicated by an arrow C represents a direction in which the centrifugal force acts.

As shown in FIG 6(b), the rib 8 is deformed such that the base portion 14 of the rib 8 is displaced outward in the vehicle width direction relative to the land surface 16 due to the effect of the centrifugal force. When the rib 8 is deformed, the outside wall surface 22 is extended, and a heavy load acts on an end portion of the land surface 16 on the outside wall surface 22 side. A contact pressure is increased in the end portion, and, therefore, the end portion tends to be worn. The inside wall surface 20 is compressed, and an end portion of the land surface 16 on the inside wall surface 20 side is lifted. Therefore, the land surface 16 cannot be in sufficient contact with the road surface G and, furthermore, a restoring force of the inside wall surface 20 which has been compressed and deformed is inhibited from being applied to a cornering force.

The cross-sectional shape of the rib 8 exerts an influence on stiffness of the rib 8. The cross-sectional shape of the rib 8 also exerts an influence on the volume of the groove 6. The cross-sectional shape of the rib 8 (or groove 6) has been examined in different ways in order to improve performances such as cornering performance while drainage performance in rainy weather is assured.

For example, JP 2016-124442 A discloses a pneumatic tire according to the preamble of claim 1 and suggests a groove cross-sectional shape which allows excellent wet performance to be exerted also after wear while excellent steering stability is maintained, and further allows breakage to be inhibited during production.

In the cross-sectional shape of the rib suggested in JP 2016-124442 A, the inclination of the outside wall surface relative to the line normal to the land surface is greater than the inclination of the inside wall surface relative to the line normal to the land surface. Therefore, during cornering, a load on the end portion of the land surface on the outside wall surface side may be increased as compared with the outside wall surface 22 of the rib 8 having a typical cross-sectional shape. In this case, uneven contact-pressure distribution in the land surface of the rib may be increased to develop uneven wear. Furthermore, the end portion of the land surface on the inside wall surface side tends to be lifted and a sufficient ground-contact area cannot be assured. Therefore, grip performance may be degraded during cornering.

A technique in which a contact-pressure distribution in the land surface 16 can be prevented from becoming uneven during cornering without changing the volume of the rib 8 is required to be established in order to improve cornering performance without degrading drainage performance while inhibiting occurrence of uneven wear.

EP 3 517 321 A1 discloses a tire having protruding portions formed at outer radial ends of groove walls. GB 1 217 076 A discloses a tire having protruding portions formed in a lower part of groove walls.

The present invention has been made in view of such circumstances, and an object of the present invention is to provide a pneumatic tire that allows cornering performance to be improved without degrading hydroplaning performance while inhibiting occurrence of uneven wear.

### SUMMARY OF THE INVENTION

A pneumatic tire according to the present invention includes a tread having a rib that extends in a circumferential direction, the rib formed by at least two grooves being formed. The rib has a land surface which is brought into contact with a road surface, and a pair of wall surfaces that extend from a base portion of the rib toward the land surface. Among the pair of wall surfaces, a wall surface located on an inner side in a vehicle width direction in a state where the tire is mounted to a vehicle is an inside wall surface, and a wall surface located on an outer side in the vehicle width direction in a state where the tire is mounted to the vehicle is an outside wall surface. The base portion is a portion between a bottom surface of the groove on the inside wall surface side and a bottom surface of the groove on the outside wall surface side. A contour of the inside wall surface and a contour of the outside wall surface are each represented as a smooth line that includes a curved line. The base portion is disposed on an inner side relative to the land surface in the vehicle width direction in a state where the tire is mounted to a vehicle.

In the pneumatic tire, a distance, from a first normal line that is normal to the land surface at an intersection of the land surface and the inside wall surface, to a first normal line that is normal to a bottom surface of a groove on the outside wall surface side at an intersection of the outside wall surface and the bottom surface, is less than a width of each of the land surface and the base portion.

In the pneumatic tire, an inside offset distance represents a distance, from the first normal line that is normal to the land surface, to a second normal line that is normal to a bottom surface of a groove on the inside wall surface side at an intersection of the inside wall surface and the bottom surface, an outside offset distance represents a distance, from the first normal line that is normal to the bottom surface, to a second normal line that is normal to the land surface at an intersection of the land surface and the outside wall surface, and each of the inside offset distance and the outside offset distance is preferably not less than 3% of the width of the land surface and preferably not greater than 30% of the width of the land surface.

In the pneumatic tire, the inside offset distance is preferably greater than the outside offset distance.

In the pneumatic tire, the inside wall surface preferably has, on the base portion side, an inside projection that projects from the first normal line that is normal to the land surface, and the outside wall surface preferably has, on the land surface side, an outside projection that projects from the first normal line that is normal to the bottom surface.

In the pneumatic tire, an angle of the inside wall surface relative to the land surface is preferably not less than 90°, and an angle of the outside wall surface relative to the land surface is preferably not less than 60° and preferably not greater than 90°.

In the pneumatic tire, a contour of a corner formed by the inside wall surface and the bottom surface of the groove on the inside wall surface side is preferably represented as an arc having a radius that is not less than 0.5 mm and not greater than 3 mm, and a contour of a corner formed by the outside wall surface and the bottom surface of the groove on the outside wall surface side is preferably represented as an arc having a radius that is not less than 0.5 mm and not greater than 3 mm.

In the pneumatic tire, the rib is preferably disposed in a portion, of the tread, located outward of the equator plane in the vehicle width direction in a state where the tire is mounted to a vehicle.

In the pneumatic tire, a corner formed by the land surface and the outside wall surface is preferably rounded or chamfered.

In the pneumatic tire of the present invention, the base portion of the rib is disposed on the inner side relative to the land surface in the vehicle width direction in a state where the tire is mounted to the vehicle. In the tire, the rib is deformed such that the base portion is moved outward in the vehicle width direction due to a centrifugal force that acts during cornering, and the entirety of the base portion is disposed vertically above the land surface.

In the tire, the inside wall surface and the outside wall surface are compressed during cornering, whereby uneven contact-pressure distribution in the land surface is unlikely to occur. Enhancement of contact pressure in the end portion of the land surface on the outside wall surface side as is found in a conventional tire, is inhibited, so that uneven wear is unlikely to occur in the tire.

Furthermore, in the tire, the end portion of the land surface on the inside wall surface side is prevented from being lifted during cornering, whereby the land surface is brought into sufficient contact with a road surface. The tire allows a sufficient grip force to be obtained during cornering, and further allows a restoring force of the inside wall surface which has been compressed and deformed to be sufficiently applied to a cornering force. Furthermore, the contour of the inside wall surface of the rib and the contour of the outside wall surface of the rib are each represented as a smooth line including a curved line. Therefore, even when the rib is deformed, stress caused by the deformation is prevented from concentrating on a certain portion. In the tire, a restoring force of the rib is sufficiently and effectively applied to a cornering force. The tire allows preferable cornering performance to be obtained.

In the tire, the rib is formed such that the base portion is displaced toward one side relative to the land surface, whereby a sufficient volume of the groove is assured. The tire allows preferable hydroplaning performance to be obtained.

The tire allows cornering performance to be improved without degrading hydroplaning performance while inhibiting occurrence of uneven wear. According to the present invention, a pneumatic tire that allows cornering performance to be improved without degrading hydroplaning performance while inhibiting occurrence of uneven wear, is obtained.

### BRIEF DESCRIPTION OF THE DRAWINGS

FIG. 1 is a cross-sectional view of a part of a pneumatic tire according to one embodiment of the present invention;
FIG. 2 is a cross-sectional view of a part of a rib of the tire shown in FIG. 1;
FIG. 3 illustrates deformation of the rib due to action of a centrifugal force;
FIG. 4 illustrates the shape of the rib;
FIG. 5 is a cross-sectional view of a part of a conventional tire; and
FIG. 6 illustrates deformation of the conventional rib due to action of a centrifugal force.

### DESCRIPTION OF THE PREFERRED EMBODIMENTS

The present invention will be described below in detail according to a preferable embodiment with reference where appropriate to the drawings.

In the present invention, a normal state refers to a state where a tire is mounted to a normal rim and the internal pressure of the tire is adjusted to a normal internal pressure, and no load is applied to the tire. In the present invention, unless otherwise specified, dimensions and angles of components of the tire are measured in the normal state.

In the present invention, the normal rim represents a rim that is defined according to the standard with which the tire complies. The "standard rim" in the JATMA standard, the "Design Rim" in the TRA standard, and the "Measuring Rim" in the ETRTO standard are each the normal rim.

In the present invention, the normal internal pressure represents an internal pressure that is defined according to the standard with which the tire complies. The "maximum air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are each the normal internal pressure. When the tire is for a passenger car, the normal internal pressure is set as 180 kPa.

In the present invention, the normal load represents a load that is defined according to the standard with which the tire complies. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are each the normal load.

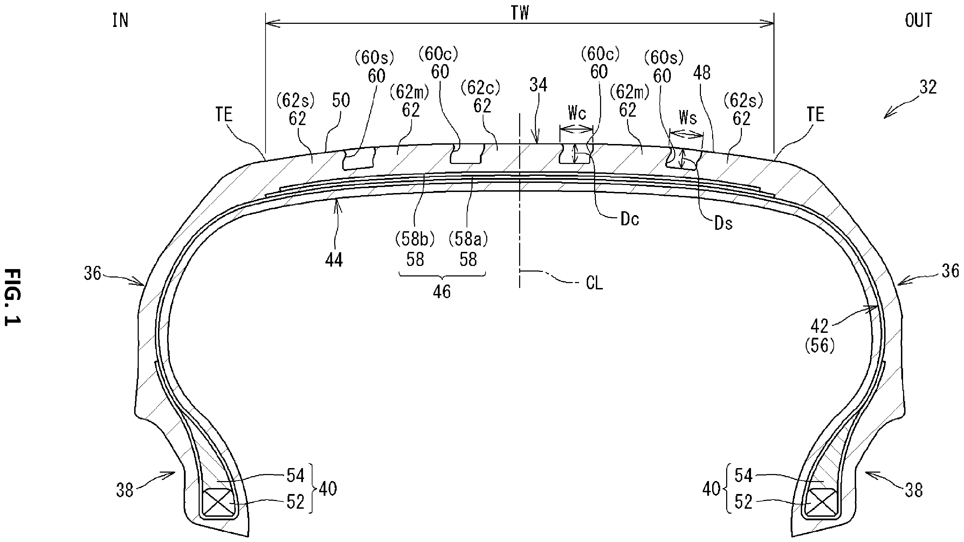

FIG 1 shows a part of a pneumatic tire 32 (hereinafter, may be simply referred to as "tire 32") according to one embodiment of the present invention. The tire 32 is mounted to a passenger car, that is, the tire 32 is a tire for a passenger car.

FIG 1 shows the cross-section of the tire 32 as taken along the plane including the rotation axis of the tire 32. In FIG 1, the left-right direction represents the axial direction of the tire 32 and the up-down direction represents the radial direction of the tire 32. The direction perpendicular to the surface of the drawing sheet in FIG. 1 represents the circumferential direction of the tire 32. In FIG 1, an alternate long and short dash line CL represents the equator plane of the tire 32.

In FIG 1, the right side on the drawing sheet corresponds to the outer side, in the width direction, of a vehicle in a state where the tire 32 is mounted to the vehicle. The left side on the drawing sheet corresponds to the inner side, in the width direction, of the vehicle in a state where the tire 32 is mounted to the vehicle. On the drawing sheet, "OUT" represents the outer side, in the width direction, of the vehicle and "IN" represents the inner side, in the width direction, of the vehicle.

The tire 32 includes a tread 34, a pair of sidewalls 36, a pair of clinches 38, a pair of beads 40, a carcass 42, an inner liner 44, and a belt 46.

The tread 34 is formed from crosslinked rubber. The tread 34 comes into contact with a road surface G at an outer surface 48. The outer surface 48 includes a tread surface 50.

In FIG 1, reference numeral TE represents ground-contact ends of the tread 34. The ground-contact ends TE are represented as the outermost ends in the axial direction on the ground-contact surface obtained when the normal load is applied to the tire 32 in the normal state, and the tire 32 is brought into contact with the plane at a camber angle of 0°.

Each sidewall 36 connects to the end of the tread 34. The sidewall 36 extends inward in the radial direction from the tread 34 along the carcass 42. The sidewall 36 is formed from crosslinked rubber.

Each clinch 38 is disposed inward of the sidewall 36 in the radial direction. The clinch 38 is brought into contact with a rim (not shown), which is not illustrated. The clinch 38 is formed from crosslinked rubber.

Each bead 40 is disposed inward of the clinch 38 in the axial direction. The bead 40 includes a core 52 and an apex 54. The core 52 includes a steel wire. The apex 54 is disposed outward of the core 52 in the radial direction. On the cross-section of the tire 32 shown in FIG 1, the apex 54 is tapered outward in the radial direction. The apex 54 is formed from crosslinked rubber having a high stiffness.

The carcass 42 is disposed inward of the tread 34, the pair of sidewalls 36, and the pair of clinches 38. The carcass 42 is extended on and between one of the beads 40 and the other of the beads 40. The carcass 42 includes at least one carcass ply 56. In the tire 32, the carcass 42 is formed from one carcass ply 56. The carcass ply 56 is turned up around each core 52 from the inner side toward the outer side in the axial direction.

The carcass ply 56 includes multiple carcass cords aligned with each other, which is not illustrated. The carcass cords are covered with topping rubber. Each carcass cord intersects the equator plane. An angle of the carcass cord relative to the equator plane is typically not less than 70° and not greater than 90°. In the tire 32, a cord formed from an organic fiber is used as the carcass cord. Examples of the organic fiber include nylon fibers, polyester fibers, rayon fibers, and aramid fibers.

The inner liner 44 is disposed inward of the carcass 42. The inner liner 44 forms the inner surface of the tire 32. The inner liner 44 is formed from crosslinked rubber having excellent airtightness.

The belt 46 is layered over the carcass 42 in a region inward of the tread 34 in the radial direction. The belt 46 includes at least two layers 58 layered in the radial direction. In the tire 32, the belt 46 includes two layers 58, that is, an inner layer 58a and an outer layer 58b. As shown in FIG 1, the width of the inner layer 58a is greater than the width of the outer layer 58b in the axial direction.

Each of the inner layer 58a and the outer layer 58b includes multiple belt cords aligned with each other, which is not illustrated. The belt cords are covered with topping rubber. Each belt cord is inclined relative to the equator plane. An angle of the belt cord relative to the equator plane is not less than 10° and not greater than 35°. In the tire 32, the material of the belt cord is steel.

In the tire 32, the tread 34 has a rib 62 that extends in the circumferential direction, by at least two grooves 60 being formed.

As shown in FIG 1, in the tire 32, four grooves 60 are formed. The grooves 60 are aligned with each other in the axial direction and extend in the circumferential direction. Among the four grooves 60, two grooves 60c disposed on the inner side in the axial direction are center circumferential grooves 60c, and two grooves 60s disposed on the outer side in the axial direction are shoulder circumferential grooves 60s.

In FIG 1, a double-headed arrow Wc represents a groove width of the center circumferential groove 60c. A double-headed arrow Ws represents a groove width of the shoulder circumferential groove 60s. A double-headed arrow Dc represents a groove depth of the center circumferential groove 60c. A double-headed arrow Ds represents a groove depth of the shoulder circumferential groove 60s. A double-headed arrow TW represents a distance in the axial direction from one of the ground-contact ends TE of the tire 32 to the other of the ground-contact ends TE of the tire 32 in the normal state. That is, TW represents a tread ground-contact width.

In the tire 32, for example, each of the groove width Wc of the center circumferential groove 60c and the groove width Ws of the shoulder circumferential groove 60s is preferably not less than 3.5% of the tread ground-contact width TW and preferably not greater than 10.0% thereof. For example, each of the groove depth Dc of the center circumferential groove 60c and the groove depth Ds of the shoulder circumferential groove 60s is preferably not less than 5.0 mm and preferably not greater than 12.0 mm.

In the tire 32, the cross-sectional shape of the groove 60 is different from the cross-sectional shape of the conventional groove 6. However, the volume of the groove 60 can be equivalent to the volume of the conventional groove 6.

In the tire 32, the tread 34 has five ribs 62 that are aligned with each other in the axial direction, by the four grooves 60 being formed. The ribs 62 extend in the circumferential direction. In the tire 32, among the ribs 62, a rib 62c disposed on the innermost side in the axial direction is a center rib 62c, and ribs 62s disposed on the outermost sides in the axial direction are shoulder ribs 62s. Ribs 62m disposed between the center rib 62c and the shoulder ribs 62s are middle ribs 62m. Among the ribs 62, the ribs 62 each of which is disposed between the grooves 60 on both sides are the center rib 62c and the middle ribs 62m. The center rib 62c is disposed on the equator plane.

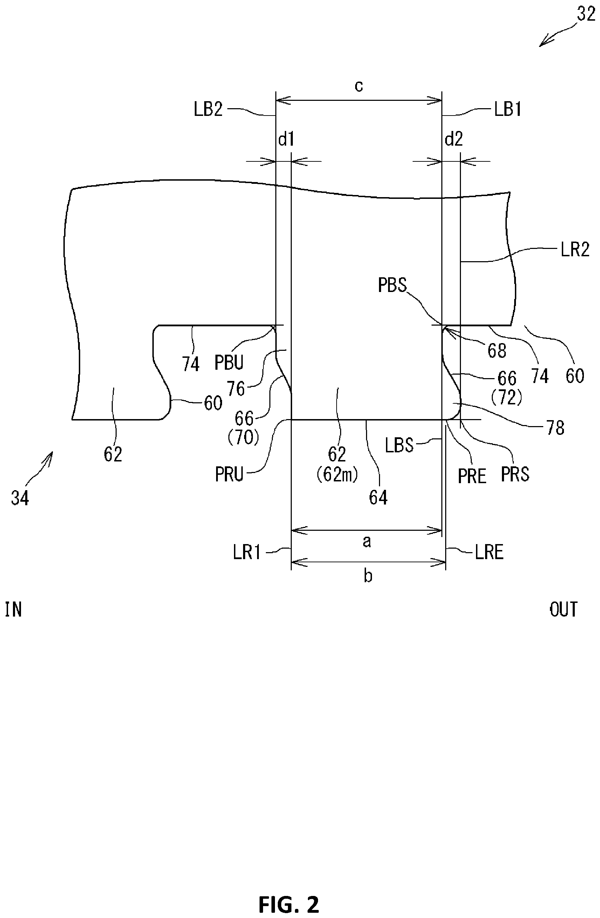

FIG 2 shows a part of the cross-section of the tire 32 as taken along the plane including the rotation axis of the tire 32. FIG 2 shows the cross-section of the rib 62 disposed at the tread 34. In FIG 2, the left-right direction represents the axial direction of the tire 32, and the up-down direction represents the radial direction of the tire 32. The direction perpendicular to the surface of the drawing sheet in FIG. 2 represents the circumferential direction of the tire 32.

The rib 62 shown in FIG 2 is the middle rib 62m disposed outward of the equator plane in the tread 34 in the vehicle width direction in a state where the tire 32 is mounted to the vehicle. The structure of the rib 62 of the present invention will be described below based on the middle rib 62m. In FIG 2, the left-right direction also represents the width direction of the vehicle. In particular, the right side on the drawing sheet corresponds to the outer side, in the width direction, of the vehicle, and the left side on the drawing sheet corresponds to the inner side, in the width direction, of the vehicle. The lower side on the drawing sheet in FIG 2 represents the road surface G side.

In the tire 32, the rib 62 includes a land surface 64 and a pair of wall surfaces 66. The land surface 64 is brought into contact with the road surface G The land surface 64 forms a part of the outer surface 48 of the tread 34, specifically, forms a part of the tread surface 50. Each wall surface 66 extends from a base portion 68 of the rib 62 toward the land surface 64. In the rib 62 shown in FIG 2, the wall surface 66 located on the left side is an inside wall surface 70, and the wall surface 66 located on the right side is an outside wall surface 72. That is, in the tire 32, among the pair of wall surfaces 66 formed in the rib 62, the wall surface 66 located on the inner side in the vehicle width direction when the tire 32 is mounted to the vehicle is the inside wall surface 70, and the wall surface 66 located on the outer side in the vehicle width direction when the tire 32 is mounted to the vehicle is the outside wall surface 72.

In the tire 32, the base portion 68 of the rib 62 represents the root of the rib 62. Specifically, a portion between a bottom surface 74 of the groove 60 on the inside wall surface 70 side of the rib 62 and a bottom surface 74 of the groove 60 on the outside wall surface 72 side of the rib 62 is the base portion 68.

As shown in FIG 2, in the tire 32, the contour of the inside wall surface 70 and the contour of the outside wall surface 72 are each represented as a smooth line including a curved line. The "smooth line including a curved line" which represents the contour of the inside wall surface 70 and the contour of the outside wall surface 72, that is, the contour of the wall surface 66 of the rib 62 is referred to also as a spline curve. In the tire 32, the contour of the wall surface 66 of the rib 62 is formed by combination of a plurality of arcs. The contour may be formed by combination of a plurality of arcs and a plurality of straight lines. When the contour of the wall surface 66 is formed by combination of one arc and the other arc, the one arc and the other arc are combined so as to be tangent to each other. When the arc and the straight line are combined, the arc and the straight line are combined so as to be tangent to each other. Thus, the contour of the wall surface 66 is represented as a smooth line including a curved line.

In the tire 32, the base portion 68 of the rib 62 is displaced toward one side in the axial direction relative to the land surface 64. In the tire 32, the rib 62 is formed such that the base portion 68 is disposed on the inner side relative to the land surface 64 in the vehicle width direction in a state where the tire 32 is mounted to the vehicle.

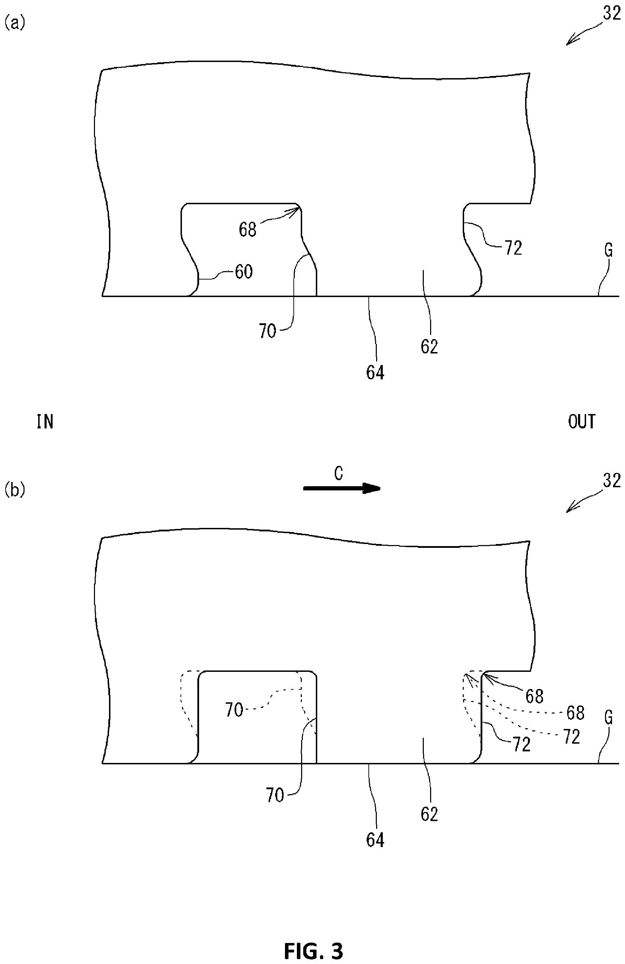

FIG 3 schematically illustrates a state where, in the tire 32 mounted to the vehicle, the rib 62 is in contact with the road surface G FIG 3(a) shows the rib 62 during straight running and FIG 3(b) shows the rib 62 during cornering. In FIG 3, the right side represents the outer side, in the width direction, of the vehicle.

The rib 62 is pressed toward the road surface G as a whole during straight running. Meanwhile, during cornering, the rib 62 is pressed toward the road surface G and, furthermore, a force along the axial direction, that is, a centrifugal force which acts on the rib 62 is increased. The direction indicated by an arrow C in FIG 3(b) represents the direction in which the centrifugal force acts.

In the tire 32, in a state where the tire 32 is mounted to the vehicle, the base portion 68 of the rib 62 is disposed on the inner side relative to the land surface 64 in the vehicle width direction. Therefore, as shown in FIG 3(b), the rib 62 is deformed such that the base portion 68 is moved outward in the vehicle width direction due to the centrifugal force that acts during cornering, and the entirety of the base portion 68 is disposed vertically above the land surface 64. Each of the inside wall surface 70 and the outside wall surface 72 is compressed during cornering. Therefore, in the tire 32, uneven contact-pressure distribution in the land surface 64 is unlikely to occur. In the tire 32, enhancement of contact pressure in the end portion of the land surface 64 on the outside wall surface 72 side as is found in the conventional tire 2, is inhibited, so that uneven wear is unlikely to occur.

Furthermore, in the tire 32, the end portion of the land surface 64 on the inside wall surface 70 side is prevented from being lifted, thereby assuring a sufficient ground-contact area during cornering. In addition to a sufficient grip force being obtained during cornering, a restoring force of the inside wall surface 70 which has been compressed and deformed is sufficiently applied to a cornering force. Furthermore, the contour of the inside wall surface 70 of the rib 62 and the contour of the outside wall surface 72 of the rib 62 are each represented as a smooth line including a curved line. Therefore, even when the rib 62 is deformed, stress caused by the deformation is prevented from concentrating on a certain portion. In the tire 32, a restoring force of the rib 62 is sufficiently and effectively applied to a cornering force. The tire 32 allows preferable cornering performance to be obtained.

The rib 62 of the tire 32 is formed such that the base portion 68 is displaced toward one side relative to the land surface 64. In the tire 32, the volume of the groove 60 is also sufficiently assured. The volume of the groove 60 which is equivalent to the volume of the groove 6 disposed in the conventional tire 2 is assured, whereby the tire 32 allows preferable hydroplaning performance to be obtained.

The tire 32 allows cornering performance to be improved without degrading hydroplaning performance while inhibiting occurrence of uneven wear.

In FIG 2, reference numeral PRU represents the intersection of the land surface 64 and the inside wall surface 70. When the corner formed by the land surface 64 and the inside wall surface 70 is rounded, the intersection PRU is represented as the intersection of the extension line of the land surface 64 and the extension line of the inside wall surface 70. A solid line LR1 represents the line that is normal to the land surface 64 and passes through the intersection PRU. The normal line LR1 is a first normal line that is normal to the land surface 64 at the intersection PRU of the land surface 64 and the inside wall surface 70.

In FIG 2, reference numeral PBS represents the intersection of the outside wall surface 72 and the bottom surface 74 of the groove 60 on the outside wall surface 72 side. As shown in FIG 2, when the corner formed by the outside wall surface 72 and the bottom surface 74 of the groove 60 is rounded, the intersection PBS is represented as the intersection of the extension line of the outside wall surface 72 and the extension line of the bottom surface 74 of the groove 60. A solid line LB1 represents the line that is normal to the bottom surface 74 of the groove 60 and passes through the intersection PBS. The normal line LB1 is a first normal line that is normal to the bottom surface 74 at the intersection PBS of the outside wall surface 72 and the bottom surface 74 of the groove 60 on the outside wall surface 72 side.

In FIG 2, reference numeral PBU represents the intersection of the inside wall surface 70 and the bottom surface 74 of the groove 60 on the inside wall surface 70 side. As shown in FIG 2, when the corner formed by the inside wall surface 70 and the bottom surface 74 of the groove 60 is rounded, the intersection PBU is represented as the intersection of the extension line of the inside wall surface 70 and the extension line of the bottom surface 74 of the groove 60. A solid line LB2 represents the line that is normal to the bottom surface 74 of the groove 60 and passes through the intersection PBU. The normal line LB2 is a second normal line that is normal to the bottom surface 74 at the intersection PBU of the inside wall surface 70 and the bottom surface 74 of the groove 60 on the inside wall surface 70 side.

In FIG 2, reference numeral PRS represents the intersection of the land surface 64 and the outside wall surface 72. As shown in FIG. 2, when the corner formed by the land surface 64 and the outside wall surface 72 is rounded, the intersection PRS is represented as the intersection of the extension line of the land surface 64 and the extension line of the outside wall surface 72. A solid line LR2 represents the line that is normal to the land surface 64 and passes through the intersection PRS. The normal line LR2 is a second normal line that is normal to the land surface 64 at the intersection PRS of the land surface 64 and the outside wall surface 72.

In FIG 2, reference numeral PRE represents the end of the land surface 64 on the outside wall surface 72 side. A solid line LRE is the line that is normal to the land surface 64 and passes through the end PRE of the land surface 64. The normal line LRE is the line normal to the land surface 64 at the end PRE of the land surface 64 on the outside wall surface 72 side.

In FIG 2, a double-headed arrow a represents a distance, from the first normal line LR1 that is normal to the land surface 64, to the first normal line LB1 that is normal to the bottom surface 74 of the groove 60. A double-headed arrow b represents a distance, from the first normal line LR1 that is normal to the land surface 64, to the normal line LRE that is normal to the land surface 64 at the end PRE of the land surface 64 on the outside wall surface 72 side. The intersection PRU described above also represents the end of the land surface 64 on the inside wall surface 70 side. Therefore, the distance b also represents the width of the land surface 64. A double-headed arrow c represents a distance, from the second normal line LB2 that is normal to the bottom surface 74 of the groove 60, to the first normal line LB1 that is normal to the bottom surface 74 of the groove 60. Each of the intersection PBU and the intersection PBS described above also represents the end of the base portion 68. Therefore, the distance c also represents the width of the base portion 68. In the present invention, the distance a, the distance b, and the distance c, and a distance d1 and a distance d2 described below are each represented as the shortest distance measured on the cross-section of the rib 62 shown in FIG. 2.

In the tire 32, a portion, of the rib 62, from the first normal line LR1 that is normal to the land surface 64 at the intersection PRU of the land surface 64 and the inside wall surface 70, to the first normal line LB1 that is normal to the bottom surface 74 at the intersection PBS of the outside wall surface 72 and the bottom surface 74 of the groove 60 on the outside wall surface 72 side is a portion in which the land surface 64 and the base portion 68 overlap each other in the thickness direction of the rib 62, thereby contributing to vertical stiffness.

In the tire 32, the distance a, from the first normal line LR1 that is normal to the land surface 64, to the first normal line LB1 that is normal to the bottom surface 74, is less than the width b of the land surface 64 and less than the width c of the base portion 68.

The tire 32 allows reduction of a volume of the portion that contributes to the vertical stiffness of the rib 62 while the width b of the land surface 64 is assured. In other words, the tire 32 allows the vertical stiffness of the rib 62 to be reduced while a ground-contact area in which the land surface 64 and the road surface G contact with each other is assured.
The tire 32 allows a sufficient grip force to be obtained, and thus exhibits excellent cornering performance. Furthermore, the rib 62 comes into mild contact with the road surface G, whereby the tire 32 can allow improvement of ride comfort. Furthermore, when the rib 62 comes into mild contact with the road surface G, vibration sound generated when the rib 62 contacts with the road surface G is reduced, and air column resonance sound is reduced in the tire 32. The tire 32 allows improvement of quietness. From this viewpoint, the distance a, from the first normal line LR1 that is normal to the land surface 64, to the first normal line LB1 that is normal to the bottom surface 74, is less than the width b of the land surface 64 and less than the width c of the base portion 68.

In FIG 2, a double-headed arrow d1 represents a distance, from the first normal line LR1 that is normal to the land surface 64, to the second normal line LB2 that is normal to the bottom surface 74. The distance d1 corresponds to an inside offset distance of the rib 62. A double-headed arrow d2 represents a distance, from the first normal line LB1 that is normal to the bottom surface 74, to the second normal line LR2 that is normal to the land surface 64. The distance d2 corresponds to an outside offset distance of the rib 62.

In the tire 32, the inside offset distance d1 is preferably not less than 3% of the width b of the land surface 64 and preferably not greater than 30% thereof.

When the inside offset distance d1 is set to be not less than 3% of the width b of the land surface 64, the base portion 68 is moved outward in the vehicle width direction due to a centrifugal force that acts during cornering, and the base portion 68 sufficiently overlaps the land surface 64 in the thickness direction of the rib 62. The inside wall surface 70 and the outside wall surface 72 are compressed during cornering, whereby uneven contact-pressure distribution in the land surface 64 is unlikely to occur in the tire 32. The end portion of the land surface 64 on the inside wall surface 70 side is prevented from being lifted, whereby a sufficient ground-contact area is assured in the tire 32 during cornering. The tire 32 allows a sufficient grip force to be obtained and further allows a restoring force of the inside wall surface 70 which has been compressed and deformed to be sufficiently applied to a cornering force. Vertical stiffness of the rib 62 can be reduced, whereby preferable ride comfort can be obtained. From this viewpoint, the inside offset distance d1 is more preferably not less than 5% of the width b of the land surface 64 and even more preferably not less than 10% thereof.

When the inside offset distance d1 is set to be not greater than 30% of the width b of the land surface 64, stiffness of the rib 62 is appropriately maintained. The tire 32 can allow cornering performance to be improved while inhibiting occurrence of uneven wear. From this viewpoint, the inside offset distance d1 is more preferably not greater than 25% of the width b of the land surface 64 and even more preferably not greater than 20% thereof.

In the tire 32, the outside offset distance d2 is preferably not less than 3% of the width b of the land surface 64 and preferably not greater than 30% thereof.

When the outside offset distance d2 is set to be not less than 3% of the width b of the land surface 64, the base portion 68 is moved outward in the vehicle width direction due to a centrifugal force that acts during cornering, and the base portion 68 sufficiently overlaps the land surface 64 in the thickness direction of the rib 62. The inside wall surface 70 and the outside wall surface 72 are compressed during cornering, whereby uneven contact-pressure distribution in the land surface 64 is unlikely to occur in the tire 32. The end portion of the land surface 64 on the inside wall surface 70 side is prevented from being lifted, whereby a sufficient ground-contact area is assured in the tire 32 during cornering. The tire 32 allows a sufficient grip force to be obtained and further allows a restoring force of the inside wall surface 70 which has been compressed and deformed to be sufficiently applied to a cornering force. Vertical stiffness of the rib 62 can be reduced, whereby preferable ride comfort can be obtained. From this viewpoint, the outside offset distance d2 is more preferably not less than 5% of the width b of the land surface 64 and even more preferably not less than 10% thereof.

When the outside offset distance d2 is set to be not greater than 30% of the width b of the land surface 64, stiffness of the rib 62 is appropriately maintained. The tire 32 can allow cornering performance to be improved while inhibiting occurrence of uneven wear. From this viewpoint, the outside offset distance d2 is more preferably not greater than 25% of the width b of the land surface 64 and even more preferably not greater than 20% thereof.

In order to allow the tire 32 to improve cornering performance while inhibiting occurrence of uneven wear, the inside offset distance d1 is more preferably not less than 3% of the width b of the land surface 64 and more preferably not greater than 30% thereof, and the outside offset distance d2 is more preferably not less than 3% of the width b of the land surface 64 and more preferably not greater than 30% thereof. In this case, in order to enhance a restoring force of the inside wall surface 70 which has been compressed and deformed while increase of contact pressure at the end portion of the land surface 64 on the outside wall surface 72 side is effectively inhibited, the inside offset distance d1 is more preferably greater than the outside offset distance d2 in the tire 32. The tire 32 can allow cornering performance to be effectively improved while occurrence of uneven wear is effectively inhibited.

As shown in FIG. 2, the inside wall surface 70 of the rib 62 has, on the base portion 68 side, an inside projection 76 projecting from the first normal line LR1 that is normal to the land surface 64. The outside wall surface 72 has, on the land surface 64 side, an outside projection 78 projecting from the first normal line LB1 that is normal to the bottom surface 74.

In the tire 32, when the base portion 68 is moved outward in the vehicle width direction due to a centrifugal force that acts during cornering, the base portion 68 sufficiently overlaps the land surface 64 in the thickness direction of the rib 62. The inside wall surface 70 and the outside wall surface 72 are effectively compressed during cornering, whereby uneven contact-pressure distribution in the land surface 64 is unlikely to occur in the tire 32. The end portion of the land surface 64 on the inside wall surface 70 side is prevented from being lifted, whereby the tire 32 allows a sufficient ground-contact area to be assured during cornering. The tire 32 allows a sufficient grip force to be obtained, and further allows a restoring force of the inside wall surface 70 which has been compressed and deformed to be sufficiently applied to a cornering force. Vertical stiffness of the rib 62 can be effectively reduced, whereby preferable ride comfort can be obtained. From this viewpoint, the rib 62 is preferably formed in the tire 32 such that the inside wall surface 70 has, on the base portion 68 side, the inside projection 76 projecting from the first normal line LR1 that is normal to the land surface 64, and the outside wall surface 72 has, on the land surface 64 side, the outside projection 78 projecting from the first normal line LB1 that is normal to the bottom surface 74.

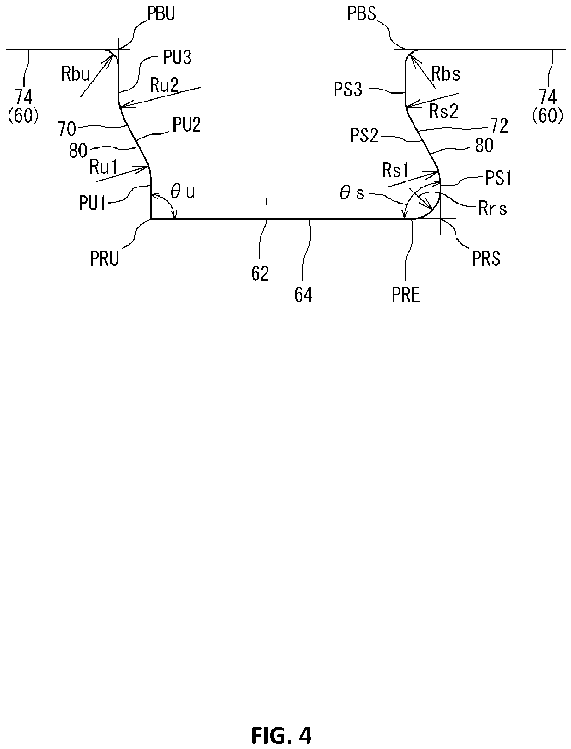

FIG 4 shows a cross-sectional shape of the rib 62 shown in FIG 2. In FIG 4, the left-right direction represents the axial direction of the tire 32 and the up-down direction represents the radial direction of the tire 32. The direction perpendicular to the surface of the drawing sheet in FIG 4 represents the circumferential direction of the tire 32. The left-right direction in FIG 4 also represents the width direction of the vehicle. In particular, the right side on the drawing sheet corresponds to the outer side, in the width direction, of the vehicle, and the left side on the drawing sheet corresponds to the inner side, in the width direction, of the vehicle. The lower side on the drawing sheet in FIG 4 corresponds to the road surface G side.

As described above, in the tire 32, the contour of the inside wall surface 70 and the contour of the outside wall surface 72 are each represented as a smooth line including a curved line. In the rib 62 shown in FIG. 4, the contour of each of the inside wall surface 70 and the outside wall surface 72 includes a plurality of arcs and a plurality of straight lines. Thus, the contour of the inside wall surface 70 and the contour of the outside wall surface 72 are each represented as a smooth line having a gentle curve 80 formed therein.

The contour of the inside wall surface 70 is represented as a straight line in a zone (hereinafter, also referred to as an inner first zone) from the intersection PRU to a point PU1.

An arc having the center outside the inside wall surface 70 is included in a zone (hereinafter, also referred to as an inner second zone) from the point PU1 to a point PU2. At the point PU1, the arc is tangent to the straight line in the inner first zone. In FIG 4, an arrow Ru1 represents the radius of the arc in the inner second zone.

An arc having the center inside the inside wall surface 70 is included in a zone (hereinafter, also referred to as an inner third zone) from the point PU2 to a point PU3. In FIG 4, an arrow Ru2 represents the radius of the arc in the inner third zone. When the arc is directly connected to the arc in the inner second zone at the point PU2, the arc is structured to be tangent to the arc in the inner second zone at the point PU2. In the tire 32, the arc in the inner third zone may be connected to the arc in the inner second zone by a straight line that is the line tangent to both the arcs. In this case, the center of the straight line is specified as the point PU2.

A zone (hereinafter, also referred to as an inner fourth zone) from the point PU3 to the intersection PBU is represented as a straight line. The straight line is tangent to the arc in the inner third zone at the point PU3.

On the contour of the inside wall surface 70, the inner second zone and the inner third zone correspond to the gentle curve 80. In the inside wall surface 70, the length and direction of the straight line in the inner first zone, the radius Ru1 and the center of the arc in the inner second zone, the radius Ru2 and the center of the arc in the inner third zone, and the length and direction of the straight line in the inner fourth zone are determined as appropriate such that the inside offset distance d1 is not less than 3% of the width b of the land surface 64 and not greater than 30% thereof.

The contour of the outside wall surface 72 is represented as a straight line in a zone (hereinafter, also referred to as an outer first zone) from the intersection PRS to a point PS1.

An arc having the center inside the outside wall surface 72 is included in a zone (hereinafter, also referred to as an outer second zone) from the point PS1 to a point PS2. The arc is tangent to the straight line in the outer first zone at the point PS1. In FIG 4, an arrow Rs1 represents the radius of the arc in the outer second zone.

An arc having the center outside the outside wall surface 72 is included in a zone (hereinafter, also referred to as an outer third zone) from the point PS2 to a point PS3. In FIG. 4, an arrow Rs2 represents the radius of the arc in the outer third zone. When the arc is directly connected to the arc in the outer second zone at the point PS2, the arc is structured to be tangent to the arc in the outer second zone at the point PS2. In the tire 32, the arc in the outer third zone may be connected to the arc in the outer second zone by a straight line that is the line tangent to both the arcs. In this case, the center of the straight line is specified as the point PS2.

A zone (hereinafter, also referred to as an outer fourth zone) from the point PS3 to the intersection PBS is represented as a straight line. The straight line is tangent to the arc in the outer third zone at the point PS3.

On the contour of the outside wall surface 72, the outer second zone and the outer third zone correspond to the gentle curve 80. In the outside wall surface 72, the length and direction of the straight line in the outer first zone, the radius Rs1 and the center of the arc in the outer second zone, the radius Rs2 and the center of the arc in the outer third zone, and the length and direction of the straight line in the outer fourth zone are determined as appropriate such that the outside offset distance d2 is not less than 3% of the width b of the land surface 64 and not greater than 30% thereof.

As described above, in the tire 32, the contour of the inside wall surface 70 and the contour of the outside wall surface 72 are each represented as a smooth line having the gentle curve 80 formed therein. Therefore, in the tire 32, when the base portion 68 is moved outward in the vehicle width direction due to a centrifugal force that acts during cornering, the base portion 68 sufficiently overlaps the land surface 64 in the thickness direction of the rib 62. The inside wall surface 70 and the outside wall surface 72 are effectively compressed during cornering, whereby uneven contact-pressure distribution in the land surface 64 is unlikely to occur in the tire 32. The end portion of the land surface 64 on the inside wall surface 70 side is prevented from being lifted, whereby the tire 32 allows a sufficient ground-contact area to be assured during cornering. The tire 32 allows a sufficient grip force to be obtained and further allows a restoring force of the inside wall surface 70 which has been compressed and deformed to be sufficiently applied to a cornering force. Furthermore, vertical stiffness of the rib 62 can be effectively reduced, whereby preferable ride comfort can be obtained. From this viewpoint, in the tire 32, each of the contour of the inside wall surface 70 and the contour of the outside wall surface 72 is more preferably represented as a smooth line having the gentle curve 80 formed therein.

As shown in FIG 4, in the tire 32, in the line that represents each of the contour of the inside wall surface 70 and the contour of the outside wall surface 72, a portion having the gentle curve 80 is represented as a smooth S-shaped line. Therefore, in the tire 32, when a centrifugal force acts during cornering, the base portion 68 is smoothly moved outward in the vehicle width direction, and more sufficiently overlaps the land surface 64 in the thickness direction of the rib 62. The tire 32 allows occurrence of uneven wear to be more effectively inhibited and allows cornering performance to be more sufficiently improved. From this viewpoint, when the contour of the inside wall surface 70 and the contour of the outside wall surface 72 are each represented as a smooth line having the gentle curve 80 formed therein, the portion having the gentle curve 80 is more preferably represented as a smooth S-shaped line. The shape of the portion having the gentle curve 80 and the position of the portion in the thickness direction of the rib 62 in the contour of the inside wall surface 70 are more preferably the same as the shape of the portion having the gentle curve 80 and the position of the portion in the thickness direction of the rib 62 in the contour of the outside wall surface 72.

In the tire 32, the corner formed by the inside wall surface 70 and the bottom surface 74 of the groove 60 on the inside wall surface 70 side is rounded. On the cross-section of the rib 62 shown in FIG 4, the contour of the corner is represented as an arc. In FIG 4, an arrow Rbu represents the radius of the arc.

In the tire 32, in order to inhibit concentration of stress onto the corner, the contour of the corner formed by the inside wall surface 70 and the bottom surface 74 of the groove 60 on the inside wall surface 70 side is preferably represented as an arc having the radius Rbu that is not less than 0.5 mm and not greater than 3 mm.

In the tire 32, the corner formed by the outside wall surface 72 and the bottom surface 74 of the groove 60 on the outside wall surface 72 side is rounded. On the cross-section of the rib 62 shown in FIG 4, the contour of the corner is represented as an arc. In FIG 4, an arrow Rbs represents the radius of the arc.

In the tire 32, in order to inhibit concentration of stress onto the corner, the contour of the corner formed by the outside wall surface 72 and the bottom surface 74 of the groove 60 on the outside wall surface 72 side is preferably represented as an arc having the radius Rbs that is not less than 0.5 mm and not greater than 3 mm.

As shown in FIG 4, in the tire 32, the corner formed by the outside wall surface 72 and the land surface 64 is rounded. On the cross-section of the rib 62 shown in FIG. 4, the contour of the corner is represented as an arc. In FIG 4, an arrow Rrs represents the radius of the arc.

In the tire 32, as shown in FIG 4, when the corner formed by the outside wall surface 72 and the land surface 64 is rounded, the arc that represents the contour of the corner may be directly connected to the arc of the contour in the above-described outer second zone, or the arc that represents the contour of the corner may be connected to the arc of the contour in the outer second zone through a straight line.

In the tire 32, since the corner formed by the outside wall surface 72 and the land surface 64 is rounded, even when a load acts on the end portion of the land surface 64 on the outside wall surface 72 side due to a centrifugal force that acts during cornering, distortion is effectively dispersed. The end portion of the land surface 64 is prevented from being worn, whereby occurrence of uneven wear is inhibited in the tire 32. From this viewpoint, the corner formed by the outside wall surface 72 and the land surface 64 is preferably rounded. From the viewpoint of obtaining the same effect, the corner may be chamfered. When the corner formed by the outside wall surface 72 and the land surface 64 is rounded, the radius Rrs of the arc that represents the contour of the rounded corner is preferably not less than 1 mm and preferably not greater than 5 mm.

In FIG 4, a double-headed arrow θu represents an angle of the inside wall surface 70 relative to the land surface 64. When the corner formed by the inside wall surface 70 and the land surface 64 is rounded, the angle θu is specified based on the tangent lines at the ends of the arc that represents the rounded contour.

In the tire 32, the angle θu is preferably not less than 90°. Thus, the end portion of the land surface 64 on the inside wall surface 70 side is effectively prevented from being lifted when a centrifugal force acts. Since the end portion of the land surface 64 on the inside wall surface 70 side is in sufficient contact with the road surface G during cornering, a sufficient grip force is obtained, and, furthermore, a restoring force of the inside wall surface 70 which has been compressed and deformed is sufficiently applied to a cornering force. In the tire 32, the angle θu is preferably not greater than 100° in order to appropriately maintain stiffness of the rib 62.

In FIG 4, a double-headed arrow θs represents an angle of the outside wall surface 72 relative to the land surface 64. When the corner formed by the outside wall surface 72 and the land surface 64 is rounded, the angle θs is specified based on the tangent lines at the ends of the arc that represents the rounded contour.

In the tire 32, the angle θs is preferably not less than 60° and preferably not greater than 90°. When the angle θs is set to be not less than 60°, enhancement of contact pressure at the end portion of the land surface 64 on the outside wall surface 72 side is effectively inhibited. In the tire 32, uneven contact-pressure distribution in the land surface 64 is effectively prevented. When the angle θs is set to be not greater than 90°, the end portion of the land surface 64 on the inside wall surface 70 side is effectively prevented from being lifted in a case where a centrifugal force acts. Since the end portion of the land surface 64 on the inside wall surface 70 side is in sufficient contact with the road surface G during cornering, a sufficient grip force is obtained, and, furthermore, a restoring force of the inside wall surface 70 which has been compressed and deformed is sufficiently applied to a cornering force.

The action of the centrifugal force during cornering is increased outward in the vehicle width direction. Therefore, a load on a portion, of the tread 34, located outward of the equator plane in the vehicle width direction is greater than a load on a portion, of the tread 34, located inward of the equator plane in the vehicle width direction, during cornering, in the tire 32. In order to improve cornering performance while inhibiting occurrence of uneven wear, in the tire 32, the rib 62 in which each of the contour of the inside wall surface 70 and the contour of the outside wall surface 72 is represented as a smooth line including a curved line and the base portion 68 is disposed on the inner side relative to the land surface 64 in the vehicle width direction in a state where the tire 32 is mounted to the vehicle, is preferably disposed in at least a portion, of the tread 34, located outward of the equator plane in the vehicle width direction.

As described above, according to the present invention, the pneumatic tire 32 that allows cornering performance to be improved without degrading hydroplaning performance while inhibiting occurrence of uneven wear, can be obtained.

The embodiment disclosed herein is in all aspects illustrative and not restrictive. The technological scope of the present invention is not limited to the embodiment described above, and includes all modifications within the scope of the appended claims.

### [Examples]

The present invention will be described below in more detail according to examples and the like. However, the present invention is not limited only to the examples, but only to the appended claims.

### [Example]

A pneumatic tire (tire size=215/55R17), for a passenger car, having the basic structure shown in FIGS. 1, 2, and 4 was obtained.

In the example, the rib was structured such that the contour of the inside wall surface and the contour of the outside wall surface were each represented as a smooth line including a curved line, and the base portion was disposed on the inner side relative to the land surface in the vehicle width direction in a state where the tire was mounted to the vehicle. The volume of the groove was set to be equivalent to the volume of the groove of Comparative example described below.

In the example, the inside offset distance d1 was set to 15% of the width b of the land surface. The outside offset distance d2 was set to 15% of the width b of the land surface. The angle θu of the inside wall surface relative to the land surface was set to 90°. The angle θs of the outside wall surface relative to the land surface was set to 90°.

In the example, the corner formed by the inside wall surface and the bottom surface of the groove on the inside wall surface side was rounded, and the radius Rbu of the arc representing the rounded contour was set to 1.5 mm.

In the example, the corner formed by the outside wall surface and the bottom surface of the groove on the outside wall surface side was rounded, and the radius Rbs of the arc representing the rounded contour was set to 1.5 mm.

In the example, the corner formed by the outside wall surface and the land surface was rounded, and the radius Rrs of the arc representing the rounded contour was set to 1.5 mm.

### [Comparative example]

A pneumatic tire (tire size=215/55R17), for a passenger car, having the basic structure shown in FIG. 5 was obtained. Comparative example was a conventional tire. The volume of the groove was equal to the volume of the groove according to the example.

### [Hydroplaning performance]

Each tire was mounted on a rim (rim size=7J) and was inflated with air, and an internal pressure of the tire was adjusted to 230 kPa. After the adjustment, the tire was set in a drum tester having a certain water film formed therein, and hydroplaning performance during running straight was evaluated. The results are indicated below in Table 1 as indexes. The greater the value is, the more excellent drainage performance is and the better the hydroplaning performance is.

### [Uneven wear]

Each tire was mounted on a rim (rim size=7J) and was inflated with air, and an internal pressure of the tire was adjusted to 230 kPa. After the adjustment, the tires were mounted to all wheels of a test vehicle (passenger car). The vehicle was caused to run on a dry asphalt road surface of a test course for 5000 km, and wear occurrence state was checked. The results are indicated below in Table 1. In Table 1, "Y" represents a case where occurrence of uneven wear was observed, and "N" represents a case where uneven wear did not occur and the entirety of the rib was uniformly worn.

### [Cornering performance and ride comfort]

Each tire was mounted on a rim (rim size=7J) and was inflated with air, and an internal pressure of the tire was adjusted to 230 kPa. After the adjustment, the tires were mounted to all wheels of a test vehicle (passenger car). A driver drove the test vehicle on a dry asphalt road surface of a test course, and made sensory evaluation for characteristics associated with cornering performance and ride comfort. The results are indicated below in Table 1 as indexes. The greater the value is, the better the evaluation is.

**[Table 1]**

| | Example | Comparative example |
|---|---|---|
| Structure | FIG. 1 | FIG. 5 |
| Hydroplaning performance | 100 | 100 |
| Uneven wear | N | Y |
| Cornering performance | 110 | 100 |
| Ride comfort | 110 | 100 |

As indicated in Table 1, in the example, cornering performance was improved without degrading hydroplaning performance while occurrence of uneven wear was inhibited. The evaluation is higher in the example than in the comparative example. The evaluation results clearly indicate that the present invention is superior.

The above-described technique for the cross-sectional shape of the rib is applicable to various tires.

## Claims

1. A pneumatic tire (32) comprising
a tread (34) having a rib (62) that extends in a circumferential direction, the rib (62) formed by at least two grooves (60) being formed, wherein
the rib (62) has a land surface (64) which is brought into contact with a road surface (G), and a pair of wall surfaces (66) that extend from a base portion (68) of the rib (62) toward the land surface (64),
among the pair of wall surfaces (66), a wall surface (66) located on an inner side in a vehicle width direction in a state where the tire (32) is mounted to a vehicle is an inside wall surface (70), and a wall surface (66) located on an outer side in the vehicle width direction in a state where the tire (32) is mounted to the vehicle is an outside wall surface (72),
the base portion (68) is a portion between a bottom surface (74) of the groove (60) on the inside wall surface (70) side and a bottom surface (74) of the groove (60) on the outside wall surface (72) side,
a contour of the inside wall surface (70) and a contour of the outside wall surface (72) are each represented as a smooth line that includes a curved line, and
the base portion (68) is disposed on an inner side relative to the land surface (64) in the vehicle width direction in a state where the tire (32) is mounted to a vehicle,
**characterized in that** a distance (a) from a first normal line (LR1) that is normal to the land surface (64) at an intersection (PRU) of the land surface (64) and the inside wall surface (70) to a first normal line (LB1) that is normal to a bottom surface (74) of a groove (60) on the outside wall surface (72) side at an intersection (PBS) of the outside wall surface (72) and the bottom surface (74) is less than a width (b, c) of each of the land surface (64) and the base portion (68).

2. The pneumatic tire (32) according to claim 1, wherein
an inside offset distance (d1) represents a distance from the first normal line (LR1) that is normal to the land surface (64) to a second normal line (LB2) that is normal to a bottom surface (74) of a groove (60) on the inside wall surface (70) side at an intersection (PBU) of the inside wall surface (70) and the bottom surface (74),
an outside offset distance (d2) represents a distance from the first normal line (LB1) that is normal to the bottom surface (74) to a second normal line (LR2) that is normal to the land surface (64) at an intersection (PRS) of the land surface (64) and the outside wall surface (72), and
each of the inside offset distance (d1) and the outside offset distance (d2) is not less than 3% of the width (b) of the land surface (64) and not greater than 30% of the width (b) of the land surface (64).

3. The pneumatic tire (32) according to claim 2, wherein the inside offset distance (d1) is greater than the outside offset distance (d2).

4. The pneumatic tire (32) according to any one of claims 1 to 3, wherein
the inside wall surface (70) has, on the base portion (68) side, an inside projection (76) that projects from the first normal line (LR1) that is normal to the land surface (64), and
the outside wall surface (72) has, on the land surface (64) side, an outside projection (78) that projects from the first normal line (LB1) that is normal to the bottom surface (74).

5. The pneumatic tire (32) according to any one of claims 1 to 4, wherein
an angle (θu) of the inside wall surface (70) relative to the land surface (64) is not less than 90°, and
an angle (θs) of the outside wall surface (72) relative to the land surface (64) is not less than 60° and not greater than 90°.

6. The pneumatic tire (32) according to any one of claims 1 to 5, wherein
a contour of a corner formed by the inside wall surface (70) and the bottom surface (74) of the groove (60) on the inside wall surface (70) side is represented as an arc having a radius (Rbu) that is not less than 0.5 mm and not greater than 3 mm, and
a contour of a corner formed by the outside wall surface (72) and the bottom surface (74) of the groove (60) on the outside wall surface (72) side is represented as an arc having a radius (Rbs) that is not less than 0.5 mm and not greater than 3 mm.

7. The pneumatic tire (32) according to any one of claims 1 to 6, wherein the rib (62) is disposed in a portion, of the tread (34), located outward of the equator plane (CL) in the vehicle width direction in a state where the tire (32) is mounted to a vehicle.

8. The pneumatic tire (32) according to any one of claims 1 to 7, wherein a corner formed by the land surface (64) and the outside wall surface (72) is rounded or chamfered.

## Patentansprüche

1. Luftreifen (32), umfassend
eine Lauffläche (34) mit einer Rippe (62), die sich in einer Umfangsrichtung erstreckt, wobei die Rippe (62) durch mindestens zwei Rillen (60) gebildet ist, wobei
die Rippe (62) eine Landfläche (64), die in Kontakt mit einer Straßenoberfläche (G) gebracht wird, und ein Paar Wandflächen (66) aufweist, die sich von einem Basisabschnitt (68) der Rippe (62) in Richtung der Landfläche (64) erstrecken,
von dem Paar Wandflächen (66) eine Wandfläche (66), die sich auf einer inneren Seite in einer Fahrzeugbreitenrichtung in einem Zustand befindet, in dem der Reifen (32) an einem Fahrzeug montiert ist, eine Innenwandfläche (70) ist, und eine Wandfläche (66), die sich auf einer äußeren Seite in der Fahrzeugbreitenrichtung in einem Zustand befindet, in dem der Reifen (32) an dem Fahrzeug montiert ist, eine Außenwandfläche (72) ist,
der Basisabschnitt (68) ein Abschnitt zwischen einer Grundfläche (74) der Rille (60) auf der Seite der Innenwandfläche (70) und einer Grundfläche (74) der Rille (60) auf der Seite der Außenwandfläche (72) ist,
eine Kontur der Innenwandfläche (70) und eine Kontur der Außenwandfläche (72) jeweils als eine glatte Linie dargestellt sind, die eine gekrümmte Linie enthält, und
der Basisabschnitt (68) in einem Zustand, in dem der Reifen (32) an einem Fahrzeug montiert ist, auf einer inneren Seite relativ zu der Landfläche (64) in der Fahrzeugbreitenrichtung angeordnet ist,
**dadurch gekennzeichnet, dass** ein Abstand (a) von einer ersten Normalen (LR1), die an einem Schnittpunkt (PRU) der Landfläche (64) und der Innenwandfläche (70) senkrecht zu der Landfläche (64) steht, zu einer ersten Normalen (LB1), die an einem Schnittpunkt (PBS) der Außenwandfläche (72) und der Grundfläche (74) senkrecht zu der Grundfläche (74) einer Rille (60) auf der Seite der Außenwandfläche (72) steht, kleiner ist als eine Breite (b, c) sowohl der Landfläche (64) als auch des Basisabschnitts (68).

2. Luftreifen (32) nach Anspruch 1, wobei
ein innerer Versatzabstand (d1) einen Abstand von der ersten Normalen (LR1), die senkrecht zu der Landfläche (64) steht, zu einer zweiten Normalen (LB2), die an einem Schnittpunkt (PBU) der Innenwandfläche (70) und der Grundfläche (74) senkrecht zu der Grundfläche (74) einer Rille (60) auf der Seite der Innenwandfläche (70) steht, darstellt,
ein äußerer Versatzabstand (d2) einen Abstand von der ersten Normalen (LB1), die senkrecht zu der Grundfläche (74) steht, zu einer zweiten Normalen (LR2), die an einem Schnittpunkt (PRS) der Grundfläche (64) und der Außenwandfläche (72) senkrecht zu der Grundfläche (64) steht, darstellt, und
der innere Versatzabstand (d1) und der äußere Versatzabstand (d2) jeweils nicht weniger als 3 % der Breite (b) der Landfläche (64) und nicht mehr als 30 % der Breite (b) der Landfläche (64) betragen.

3. Luftreifen (32) nach Anspruch 2, wobei der innere Versatzabstand (d1) größer ist als der äußere Versatzabstand (d2).

4. Luftreifen (32) nach einem der Ansprüche 1 bis 3, wobei
die Innenwandfläche (70) auf der Seite des Basisabschnitts (68) einen inneren Vorsprung (76) aufweist, der von der ersten Normalen (LR1), die senkrecht zu der Landfläche (64) steht, vorsteht, und
die Außenwandfläche (72) auf der Seite der Landfläche (64) einen äußeren Vorsprung (78) aufweist, der von der ersten Normalen (LB1), die senkrecht zu der Grundfläche (74) steht, vorsteht.

5. Luftreifen (32) nach einem der Ansprüche 1 bis 4, wobei
ein Winkel (θu) der Innenwandfläche (70) relativ zu der Landfläche (64) nicht weniger als 90° beträgt, und
ein Winkel (θs) der Außenwandfläche (72)) relativ zu der Grundfläche (64) nicht weniger als 60° und nicht mehr als 90° beträgt.

6. Luftreifen (32) nach einem der Ansprüche 1 bis 5, wobei
eine Kontur einer Ecke, die durch die Innenwandfläche (70) und die Grundfläche (74) der Rille (60) auf der Seite der Innenwandfläche (70) gebildet ist, als ein Bogen mit einem Radius (Rbu) dargestellt ist, der nicht kleiner als 0,5 mm und nicht größer als 3 mm ist, und
eine Kontur einer Ecke, die durch die Außenwandfläche (72) und die Grundfläche (74) der Rille (60) auf der Seite der Außenwandfläche (72) gebildet ist, als ein Bogen mit einem Radius (Rbs) dargestellt ist, der nicht kleiner als 0,5 mm und nicht größer als 3 mm ist.

7. Luftreifen (32) nach einem der Ansprüche 1 bis 6, wobei die Rippe (62) in einem Abschnitt der Lauffläche (34) angeordnet ist, der in einem Zustand, in dem der Reifen (32) an einem Fahrzeug montiert ist, außerhalb der Äquatorebene (CL) in Richtung der Fahrzeugbreite liegt.

8. Luftreifen (32) nach einem der Ansprüche 1 bis 7, wobei eine von der Landfläche (64) und der Außenwandfläche (72) gebildete Ecke abgerundet oder abgeschrägt ist.

## Revendications

1. Bandage pneumatique (32) comprenant :
une bande de roulement (34) ayant une nervure (62) qui s'étend dans une direction circonférentielle, la nervure (62) étant formée par au moins deux rainures (60) étant formées, dans lequel
la nervure (62) a une surface en relief (64) qui est amenée en contact avec une surface de route (G), et une paire de surfaces formant parois (66) qui s'étendent depuis une portion de base (68) de la nervure (62) vers la surface en relief (64),
parmi la paire de surfaces formant parois (66), une surface formant paroi (66) située sur un côté intérieur dans une direction de largeur de véhicule dans un état dans lequel le pneumatique (32) est monté sur un véhicule est une surface formant paroi intérieure (70), et une surface formant paroi (66) située sur un côté extérieur dans la direction de largeur de véhicule dans un état dans lequel le pneumatique (32) est monté sur le véhicule est une surface formant paroi extérieure (72),
la portion de base (68) est une portion entre une surface de fond (74) de la rainure (60) sur le côté de la surface formant paroi intérieure (70) et une surface de fond (74) de la rainure (60) sur le côté de la surface formant paroi extérieure (72),
un contour de la surface formant paroi intérieure (70) et un contour de la surface formant paroi extérieure (72) sont chacun représentés comme une ligne lisse qui inclut une ligne incurvée, et
la portion de base (68) est disposée sur un côté intérieur relativement à la surface en relief (64) dans la direction de largeur de véhicule dans un état dans lequel le pneumatique (32) est monté sur un véhicule,
**caractérisé en ce qu'**une distance (a) depuis une première ligne normale (LR1) qui est normale par rapport à la surface en relief (64) à une intersection (PRU) de la surface en relief (64) et de la surface formant paroi intérieure (70) jusqu'à une première ligne normale (LB1) qui est normale par rapport à une surface de fond (74) d'une rainure (60) sur le côté de la surface formant paroi extérieure (72) à une intersection (PBS) de la surface formant paroi extérieure (72) et de la surface de fond (74) est inférieure à une largeur (b, c) de chaque élément parmi la surface en relief (64) et la portion de base (68).

2. Bandage pneumatique (32) selon la revendication 1, dans lequel
une distance de décalage intérieure (d1) représente une distance depuis la première ligne normale (LR1) qui est normale par rapport à la surface en relief (64) jusqu'à une seconde ligne normale (LB2) qui est normale par rapport à une surface de fond (74) d'une rainure (60) sur le côté de la surface formant paroi intérieure (70) à une intersection (PBU) de la surface formant paroi intérieure (70) et de la surface de fond (74),
une distance de décalage extérieure (d2) représente une distance depuis la première ligne normale (LB1) qui est normale par rapport à la surface de fond (74) jusqu'à une seconde ligne normale (LR2) qui est normale par rapport à la surface en relief (64) à une intersection (PRS) de la surface en relief (64) et de la surface formant paroi extérieure (72), et
chaque distance parmi la distance de décalage intérieure (d1) et la distance de décalage extérieure (d2) n'est pas inférieure à 3 % de la largeur (b) de la surface en relief (64) et n'est pas supérieure à 30 % de la largeur (b) de la surface en relief (64).

3. Bandage pneumatique (32) selon la revendication 2, dans lequel la distance de décalage intérieure (d1) est supérieure à la distance de décalage extérieure (d2).

4. Bandage pneumatique (32) selon l'une quelconque des revendications 1 à 3, dans lequel
la surface formant paroi intérieure (70) a, sur le côté de la portion de base (68), une projection intérieure (76) qui se projette depuis la première ligne normale (LR1) qui est normale par rapport à la surface en relief (64), et
la surface formant paroi extérieure (72) a, sur le côté de la surface en relief (64), une projection extérieure (78) qui se projette depuis la première ligne normale (LB1) qui est normale par rapport à la surface de fond (74).

5. Bandage pneumatique (32) selon l'une quelconque des revendications 1 à 4, dans lequel
un angle (θu) de la surface formant paroi intérieure (70) relativement à la surface en relief (64) n'est pas inférieur à 90°, et
un angle (θs) de la surface formant paroi extérieure (72) relativement à la surface en relief (64) n'est pas inférieur à 60° et n'est pas supérieur à 90°.

6. Bandage pneumatique (32) selon l'une quelconque des revendications 1 à 5, dans lequel
un contour d'un coin formé par la surface formant paroi intérieure (70) et la surface de fond (74) de la rainure (60) sur le côté de la surface formant paroi intérieure (70) est représenté sous la forme d'un arc ayant un rayon (Rbu) qui n'est pas inférieur à 0,5 mm et qui n'est pas supérieur à 3 mm, et
un contour d'un coin formé par la surface formant paroi extérieure (72) et la surface de fond (74) de la rainure (60) sur le côté de la surface formant paroi extérieure (72) est représenté sous la forme d'un arc ayant un rayon (Rbs) qui n'est pas inférieur à 0,5 mm et qui n'est pas supérieur à 3 mm.

7. Bandage pneumatique (32) selon l'une quelconque des revendications 1 à 6, dans lequel la nervure (62) est disposée dans une portion de la bande de roulement (34) située à l'extérieur du plan d'équateur (CL) dans la direction de largeur de véhicule dans un état dans lequel le pneumatique (32) est monté sur un véhicule.

8. Bandage pneumatique (32) selon l'une quelconque des revendications 1 à 7, dans lequel un coin formé par la surface en relief (64) et la surface formant paroi extérieure (72) est arrondi ou chanfreiné.
